# EUROPEAN PATENT APPLICATION

(11) **EP 4 582 492 A2**
(43) Date of publication of application: **09.07.2025**
(21) Application number: 24198457.4
(22) Date of filing: 04.09.2024
(51) Int. Cl.: C09C 1/22, C08K 3/22, C09C 1/24

(54) **GLOVE**

(30) Priority: 02.01.2024 MY PI2024000010
(71) Applicant: TOP GLOVE INTERNATIONAL SDN. BHD., 41050 Klang Selangor (MY)
(72) Inventor: NG, Yong Lin, 41050 Klang (MY); VIDHYAA, Paroo Indran, 41050 Klang (MY); NUR AMALINA, Ahmad Taifuddin, 41050 Klang (MY)
(74) Representative: Croce, Valeria

(57) **Abstract**

A metallic pigment additive comprises iron oxide, surfactant, preservative, stabilizer and solvent. A latex formulation comprises the metallic pigment additive as mentioned above and glove prepared therefrom, wherein the minimum thickness of glove fragment that can be detected is 0.01 mm and wherein the glove has magnetization ranging between 0.10 emu/g to 1.0 emu/g, preferably 0.57 emu/g.

## Description

### FIELD OF THE INVENTION

The present invention relates to a metallic pigment additive, in particular the metallic pigment additive is used in a latex formulation to prepare a glove that is detectable by a metal detector without compromising the mechanical properties.

### BACKGROUND OF THE INVENTION

Gloves are important protective equipment used to avoid cross contamination in food and beverages industries. However, in some cases, a fragment or a torn glove piece itself could become a contaminant in food and beverages. Conventionally, visual inspection has been used as a method to identify contaminants in food and beverages.

However, visual inspection is time-consuming and less effective as we can only detect contaminant which appears on the visible surface of the food or beverages. In order to overcome the aforementioned disadvantages of visual inspection, there have been attempts in the art, for instance, to utilize metal detector as a tool to discover contaminants in these products. Thus, metallic additive was incorporated into a glove formulation to enable the metal detector to identify glove pieces or fragments in these food and beverages related products.

However, it was easier to detect large glove pieces having metallic additive in the food or beverages. In contrary, it was difficult to detect small glove pieces having metallic additive in the food or beverages when the glove piece has low thickness. In such cases, a substantial quantity of the metallic additive is required in the formulation which in turn adversely reduces the mechanical properties of the glove.

Having said the above, it is obvious that existing approach has its own disadvantages in producing glove comprising component having metallic properties. As such there is a need to identify an appropriate metallic pigment additive to be incorporated in the latex formulation to produce a glove that is detectable by a metal detector without compromising the mechanical properties.

### SUMMARY OF THE INVENTION

The present invention relates to a metallic pigment additive comprising iron oxide, wherein the iron oxide is in α-Fe₂O₃ hematite phase and used in an amount ranging between 20% to 30% by weight of the metallic pigment additive; surfactant, wherein the surfactant is used in an amount ranging between 2% to 4% by weight of the metallic pigment additive; preservative, wherein the preservative is used in an amount ranging between 0.2% to 0.3% by weight of the metallic pigment additive; stabilizer, wherein the stabilizer is used in an amount ranging between 0.2% to 0.4% by weight of the metallic pigment additive; and solvent, wherein the solvent is used in an amount to achieve 100% by weight of the metallic pigment additive.

The present invention further relates to a latex formulation comprising a metallic pigment additive, wherein the metallic pigment additive comprises iron oxide, wherein the iron oxide is in α-Fe₂O₃ hematite phase and used in an amount ranging between 20% to 30% by weight of the metallic pigment additive; surfactant, wherein the surfactant is used in an amount ranging between 2% to 4% by weight of the metallic pigment additive; preservative, wherein the preservative is used in an amount ranging between 0.2% to 0.3% by weight of the metallic pigment additive; stabilizer wherein the stabilizer is used in an amount ranging between 0.2% to 0.4% by weight of the metallic pigment additive; and solvent, wherein the solvent is used in an amount to achieve 100% by weight of the metallic pigment additive.

Still further, the present invention relates to a glove that is prepared from the latex formulation as mentioned above.

Additional aspects, features and advantages of the invention will become apparent to those skilled in the art upon consideration of the following detailed description of preferred embodiments of the invention.

### DETAILED DESCRIPTION OF THE INVENTION

Detailed description of preferred embodiments of the present invention is disclosed herein. It should be understood, however, that the embodiments are merely exemplary of the present invention, which may be embodied in various forms. Therefore, the details disclosed herein are not to be interpreted as limiting, but merely as the basis for the claims and for teaching one skilled in the art of the invention. The numerical data or ranges used in the specification are not to be construed as limiting.

The present invention relates to a metallic pigment additive, in particular the metallic pigment additive is used in a latex formulation to prepare a glove that is detectable by a metal detector without compromising the mechanical properties. Ideally, this approach is taken to detect glove contamination in the food and beverages industry during packaging process before reaching the market.

Hereafter, the glove of the present invention that includes a metallic pigment additive will be referred as metal detectable glove. The metal detectable glove of the present invention ensures the metallic pigment additive is safe to be used in the food and beverages industries. Further, the metal detectable glove of the present invention may be used in various industries/applications such as but not limited to cosmetic, textiles and/or pharmaceuticals.

First aspect of the present invention discusses on a metallic pigment additive, wherein the metallic pigment additive comprises:
iron oxide, wherein the iron oxide is used in an amount ranging between 20.0% to 30.0% by weight, preferably ranging between 23% to 28% by weight, most preferably 25% by weight of the metallic pigment additive, wherein the iron oxide is in α-Fe₂O₃ hematite phase. For the purpose of the present invention, substituting iron oxide in hematite phase with iron oxide in magnetite phase and/or maghemite phase will not result in the desired outcome of the present invention. Iron oxide in α-Fe₂O₃ hematite phase has lower toxicity as compared to iron oxide in magnetite phase and/or maghemite phase. This is because iron oxide in α-Fe₂O₃ hematite is inert, stable under room temperature and has low potential of releasing ions or compounds that could pose significant health risks.
surfactant, wherein the surfactant is used in an amount ranging between 2.0% to 4.0% by weight, preferably ranging between 2.5% to 3.5% by weight, most preferably 3% by weight of the metallic pigment additive. The surfactant is selected from the group consisting of anionic surfactant and non-ionic surfactant.

The anionic surfactant is selected from the group consisting of sulphonic acid, stearic acid and mixtures therefrom, preferably sulphonic acid. The non-ionic surfactant is selected from the group consisting of alcohol ethoxylates, alkylphenol ethoxylates, fatty alcohol polyglycol ethers, glyceryl esters, sorbitan esters and mixtures therefrom, preferably alcohol ethoxylate.
preservative, wherein the preservative is used in an amount ranging between 0.2% to 0.3% by weight, preferably ranging between 0.25% to 0.28% by weight, most preferably 0.26% by weight of the metallic pigment additive. The preservative is isothiazole derivative, wherein the isothiazole derivative is selected from the group consisting of 1,2-benzisothiazol-3(2H)-one, 2-methyl-3(2H)-isothiazolone and mixtures therefrom, preferably mixtures of 1,2-benzisothiazol-3(2H)-one and 2-methyl-3(2H)-isothiazolone.
stabilizer, wherein the stabilizer is used in an amount ranging between 0.2% to 0.4% by weight, preferably ranging between 0.25% to 0.35% by weight, most preferably 0.3% by weight of the metallic pigment additive. The stabilizer is a dihydric alcohol, wherein the stabilizer is selected from the group consisting of propylene glycol, ethylene glycol and mixtures therefrom, preferably propylene glycol. The stabilizer helps to stabilize the iron oxide in α- Fe₂O₃ hematite phase in the metallic pigment additive formulation, ensuring they form a stable metallic pigment additive compound. The stabilizer of the present invention can also act as a binder providing cohesion and adhesion between the iron oxide in α- Fe₂O₃ hematite phase and other components of the metallic pigment additive. This enhances the stability and durability of the metallic pigment additive of the present invention.
pigment, wherein the pigment is used in an amount ranging between 16.0% to 22.0% by weight, preferably ranging between 18% to 21% by weight, most preferably 20% by weight of the metallic pigment additive. The pigment can be but not limited to copper phthalocyanine blue, carbazole violet and mixtures therefrom, preferably mixtures of copper phthalocyanine blue and carbazole violet.
solvent, wherein the solvent is used in an amount to achieve 100% by weight of the metallic pigment additive. The solvent is selected from the group consisting of tap water, distilled water, deionized water and mixtures thereof, preferably tap water.

The metallic pigment additive of the present invention has pH ranging between 7 to 14, preferably ranging between 7.5 to 13.5, most preferably 9.5 and total solid content is ranging between 10% to 50%, preferably ranging between 20% to 48%, most preferably 40%. The metallic pigment additive of the present invention has particle size of D10 of 0.5 µm and particle size of D90 of 2.4 µm. The metallic pigment additive of the present invention has viscosity ranging between 30 cP to 200 cP, preferably ranging between 50 cP to 100 cP, most preferably 70 cP (measured at speed of 100 rpm using spindle 1 and Brookfield LVT).

Table 1 shows the chemical components (as listed above) and compositions thereof used to prepare the metallic pigment additive of the present invention.

**Table 1: Chemical components and compositions thereof used to prepare the metallic pigment additive of the present invention**

| **Chemical components** | **Working range, wt%** | **Preferred range, wt%** | **Typical value, wt%** |
|---|---|---|---|
| Iron oxide in α- Fe₂O₃ hematite phase | 20.0 to 30.0 | 23.0 to 28.0 | 25.0 |
| Surfactant | 2.0 to 4.0 | 2.5 to 3.5 | 3.0 |
| Preservative | 0.2 to 0.3 | 0.25 to 0.28 | 0.26 |
| Stabilizer | 0.2 to 0.4 | 0.25 to 0.35 | 0.30 |
| Pigment | 16.0 to 22.0 | 18.0 to 21.0 | 20.0 |
| Solvent | Used in an amount to achieve 100% by weight of the metallic pigment additive | | |

Second aspect of the present invention discusses on a method of preparing the metallic pigment additive of the present invention with the chemical components listed in Table 1, wherein the metallic pigment additive of the present invention is prepared by mixing the iron oxide in α-Fe₂O₃ hematite phase, surfactant, preservative, stabilizer, pigment and solvent one after another with no particular order, wherein the mixing is carried out for a duration ranging between 30 minutes to 480 minutes, preferably 180 minutes for a speed ranging between 600 rpm to 1500 rpm, preferably 900 rpm.

Third aspect of the present invention discusses a glove, wherein glove comprises the metallic pigment additive of the present invention in which its composition is as described in Table 1 and prepared based on the method as described in the second aspect of the present invention.

The latexes used to prepare the gloves of the present invention can be but not limited to natural rubber (NR) latex, acrylonitrile butadiene rubber (NBR) latex, polyisoprene (PI) latex, polychloroprene (CR) latex, polyurethane (PU) latex and mixtures thereof.

The method of manufacturing the glove of the present invention was adopted from any commonly known method in the glove manufacturing industry, wherein the method includes the steps of:
i. cleaning a former to produce a cleaned former, wherein the first step is treatment using acidic solutions, the second step is treatment using alkaline solutions, the third step is rinsing with water, the fourth step is brushing and the fifth step is rinsing with water to ensure the former surface is cleaned;
ii. dipping the cleaned former obtained in step (i) into a coagulant solution at a temperature ranging between 60°C to 65°C for a time period ranging between 5 seconds to 10 seconds to coat a coagulant layer on the former, wherein the coagulant solution is any conventional coagulant solution;
iii. drying the coagulant layer coated on the former obtained in step (ii) at a temperature ranging between 120°C to 195°C for a time period ranging between 2 minutes to 6 minutes to obtain a dried coagulant layer;
iv. dipping the dried coagulant layer coated on the former obtained in step (iii) into the latex dipping tank containing latex formulation (as described in Table 2) at a temperature ranging between 32°C to 37°C for a time period ranging between 5 seconds to 10 seconds to coat a latex layer on the former;
v. drying the latex layer coated on the former obtained in step (iv) at a temperature ranging between 100°C to 180°C for a time period ranging between 25 minutes to 40 minutes to obtain dried latex film;
vi. pre-leaching the dried latex film coated on the former obtained in step (v) with hot water at a temperature ranging between 50°C to 70°C for a time period ranging between 11 seconds to 19 seconds to leach out chemical residues to obtain pre-leached latex film;
vii. beading the pre-leached latex film coated on the former obtained in step (vi), wherein the beading is performed using any conventional beading carpet or beading brush found in the production line to produce beaded latex film;
viii. curing the beaded latex film coated on the former obtained in step (vii) at a temperature ranging between 110°C to 140°C for a time period ranging between 20 minutes to 40 minutes to produce cured latex film;
ix. treating the cured latex film coated on the former obtained in step (viii) with chlorine water at temperature ranging between 35°C to 40°C for a time period ranging between 10 seconds to 45 seconds to obtain treated latex film;
x. post-leaching the treated latex film coated on the former obtained in step (ix) with hot water at a temperature ranging between 60°C to 70°C for a time period ranging between 21 seconds to 29 seconds to leach out chemical residues to obtain post-leached latex film;
xi. drying the post-leached latex film coated on the former obtained in step (x) at a temperature ranging between 90°C to 150°C for a time period ranging between 3 minutes to 10 minutes to produce glove of the present invention; and
xii. stripping the glove obtained in step (xi) from the former.

The latex formulation used in step (iv) as mentioned in the method above can be of any conventional latex formulation having metallic pigment additive of the present invention, preferably comprises base polymer (i.e. acrylonitrile butadiene rubber latex), pH adjuster (i.e. potassium hydroxide), opacity enhancer (i.e titanium dioxide), crosslinking agent (i.e. mixture of sulphur and zinc oxide), accelerator (i.e. mixture of zinc diethyldithiocarbamate and zinc dibutyldithiocarbamate), stabilizer (i.e. sodium dodecylbenzenesulphonate), thickener (i.e. alkali swellable acrylic polymer emulsion), antitack agent (i.e. paraffin wax), dispersing agent (i.e. sodium poly(naphthaleneformaldehyde) sulphonate), antifoaming agent (i.e. silicone emulsion) and metallic pigment additive of the present invention.

Table 2 shows the chemical components (as listed above) and compositions thereof used to prepare the glove of the present invention.

**Table 2: Chemical components and compositions thereof to prepare the glove of present invention**

| **Chemical components** | **Working range (phr)** | **Preferred range (phr)** | **Typical value (phr)** |
|---|---|---|---|
| Base polymer | 100 | 100 | 100 |
| pH adjuster | 0.5 to 3.0 | 0.6 to 2.9 | 1.6 |
| Opacity enhancer | 0.6 to 1.8 | 1.0 to 1.7 | 1.65 |
| Crosslinking agent | 0.8 to 3.6 | 1.1 to 2.7 | 2.3 |
| Accelerator | 0.2 to 1.0 | 0.3 to 0.9 | 0.4 |
| Stabilizer | 0.4 to 1.0 | 0.5 to 0.8 | 0.7 |
| Thickener | 0.1 to 0.7 | 0.15 to 0.6 | 0.5 |
| Antitack | 0.1 to 0.5 | 0.15 to 0.3 | 0.2 |
| Dispersing agent | 0.5 to 1.5 | 0.6 to 1.3 | 1.1 |
| Antifoaming agent | 0.005 to 0.1 | 0.01 to 0.05 | 0.02 |
| Metallic pigment additive of the present invention | 2.0 to 30.0 | 10.0 to 20.0 | 15.0 |

The glove of the present invention is prepared using the latex formulation as described above and its compositions as summarized in Table 2 adopting any commonly known method in the glove manufacturing industry, wherein the latex formulation comprises the metallic pigment additive of the present invention as summarized in Table 1 which is prepared based on the method as described in the second aspect of the present invention.

The metal detectable glove of the present invention has a thickness ranging between 0.01 mm to 0.40 mm, preferably ranging between 0.05 mm to 0.40 mm at palm area. The glove of the present invention can be detected by but not limited to a metal detector and/or the following settings and/or parameters, wherein the metal detector has chamber's aperture size of 300 mm x 100 mm, frequency settings ranging from 50 kHz to 1 MHz at detection sensitivity of an iron ball (Fe) having a diameter of 0.6 mm, non-ferrous (NFe) diameter of 0.8 mm and stainless steel (SS) diameter of 1.0 mm with a phase angle is set between 0° to 360°, where the minimum size of glove fragment that can be detected is 5 mm x 5 mm and minimum thickness of glove fragment that can be detected is 0.01 mm, provided that the mechanical properties of the gloves are not compromised. The metal detectable glove of the present invention has magnetization ranging between 0.10 emu/g to 1.0 emu/g, preferably 0.57 emu/g. The metal detectable glove of the present invention may be single layered or multi-layered.

The following examples are constructed to illustrate the present invention in a nonlimiting sense.

### Metal detectable NR glove of the present invention

For the purpose of the present invention, Set 1 refers to a conventional glove without metallic pigment additive and Set 2 refers to the metal detectable glove comprising metallic pigment additive of the present invention.

The gloves mentioned above are tested for mechanical properties such as tensile strength and elongation at break according to American Society for Testing and Materials (ASTM D6319) standard requirements for both before and after aging at 100°C for 22 hours. Further, the gloves mentioned above are tested against overall migration test (OMT) based on European regulation for food contact materials for ethanol and acetic acid.

Table 3 displays the outcome of tensile strength and elongation at break for conventional glove and metal detectable glove of the present invention.

**Table 3: Outcome of tensile strength and elongation at break for conventional glove and metal detectable glove of the present invention**

| Set | Tensile strength, MPa | | Elongation at break, % | |
|---|---|---|---|---|
| | Before aging | After aging | Before aging | After aging |
| Set 1 | 23.5 | 19.2 | 567 | 446 |
| Set 2 | 31.3 | 30.5 | 549 | 477 |
| Standards | Min 14 | Min 14 | Min 500 | Min 400 |

Based on Table 3, it is noticeable that the metal detectable glove of the present invention meets all the requirements of ASTM D6319 for the tensile strength and elongation at break. Further, it is noticeable that the metal detectable glove of the present invention (Set 2) has higher tensile strength as compared to conventional glove (Set 1) for both before and after aging indicating that the metallic pigment additive of the present invention improves the strength of the glove. Also, it is noticeable that the metal detectable glove of the present invention (Set 2) has higher elongation at break as compared to conventional glove (Set 1) for after aging.

Table 4 displays the results tested against OMT based on European regulation for food contact materials (i.e. 50% ethanol and 3% acetic acid) for conventional glove and metal detectable glove of the present invention.

**Table 4: Results tested against OMT based on European regulation for food contact materials for conventional glove and metal detectable glove of the present invention**

| Set | Overall migration limit (mg/dm³) | |
|---|---|---|
| | Ethanol | Acetic Acid |
| Set 1 | 9.0 | 7.7 |
| Set 2 | 4.5 | 5.1 |
| Standard limit | < 10 mg/dm³ | |

Based on Table 4, it is noticeable that the metal detectable glove of the present invention (Set 2) meets the requirements of OMT based on European regulation for food contact materials. Hence, the metal detectable glove of the present invention is safe to be used in the food and beverages industries. Further, it is noticeable that the metal detectable glove of the present invention (Set 2) has lower overall migration limit as compared to conventional glove (Set 1), indicating that the metal detectable glove of the present invention has lower leaching of components.

As a whole, metal detectable glove of the present invention is able to overcome the conventional shortcomings because it comprises an appropriate metallic pigment additive that is usable for detection of the glove contamination in the food and beverages industries using a metal detector, wherein the minimum thickness of glove fragment that can be detected is 0.01 mm as well as meets all the standard requirements for mechanical properties which shows that the mechanical properties are not compromised.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises", "comprising", "including" and "having" are inclusive and therefore specify the presence of stated features, integers, steps, operations, elements and/or components, but do not preclude the presence or addition of one or more other features, integers, steps, operations, elements, components and/or groups therefrom.

The method steps, processes and operations described herein are not to be construed as necessarily requiring their performance in the particular order discussed or illustrated, unless specifically identified as an order of performance. It is also to be understood that additional or alternative steps may be employed. The use of the expression "at least" or "at least one" suggests the use of one or more elements, as the use may be in one of the embodiments to achieve one or more of the desired objects or results.

## Claims

1. A metallic pigment additive comprising:
iron oxide, wherein the iron oxide is in α-Fe₂O₃ hematite phase and used in an amount ranging between 20% to 30% by weight of the metallic pigment additive;
surfactant, wherein the surfactant is used in an amount ranging between 2% to 4% by weight of the metallic pigment additive;
preservative, wherein the preservative is used in an amount ranging between 0.2% to 0.3% by weight of the metallic pigment additive;
stabilizer, wherein the stabilizer is used in an amount ranging between 0.2% to 0.4% by weight of the metallic pigment additive; and
solvent, wherein the solvent is used in an amount to achieve 100% by weight of the metallic pigment additive.

2. The metallic pigment additive as claimed in claim 1, wherein the metallic pigment additive further comprises pigment and wherein the pigment is used in an amount ranging between 16% to 22% by weight of the metallic pigment additive.

3. The metallic pigment additive as claimed in claim 1, wherein the surfactant is selected from the group consisting of anionic surfactant and non-ionic surfactant.

4. The latex formulation as claimed in claim 3, wherein the anionic surfactant is selected from the group consisting of sulphonic acid, stearic acid and mixtures therefrom.

5. The latex formulation as claimed in claim 3, wherein the non-ionic surfactant is selected from the group consisting of alcohol ethoxylates, alkylphenol ethoxylates, fatty alcohol polyglycol ethers, glyceryl esters, sorbitan esters and mixtures therefrom.

6. The metallic pigment additive as claimed in claim 1, wherein the preservative is isothiazole derivative selected from the group consisting of 1,2-benzisothiazol-3(2H)-one, 2-methyl-3(2H)-isothiazolone and mixtures therefrom.

7. The metallic pigment additive as claimed in claim 1, wherein the stabilizer is selected from the group consisting of propylene glycol, ethylene glycol and mixtures therefrom.

8. The metallic pigment additive as claimed in claim 1, wherein the solvent is selected from the group consisting of tap water, distilled water, deionized water and mixtures thereof.

9. A latex formulation comprising a metallic pigment additive, wherein the metallic pigment additive comprises:
iron oxide, wherein the iron oxide is in α- Fe₂O₃ hematite phase and used in an amount ranging between 20% to 30% by weight of the metallic pigment additive;
surfactant, wherein the surfactant is used in an amount ranging between 2% to 4% by weight of the metallic pigment additive;
preservative, wherein the preservative is used in an amount ranging between 0.2% to 0.3% by weight of the metallic pigment additive;
stabilizer, wherein the stabilizer is used in an amount ranging between 0.2% to 0.4% by weight of the metallic pigment additive; and
solvent, wherein the solvent is used in an amount to achieve 100% by weight of the metallic pigment additive.

10. The latex formulation as claimed in claim 9, wherein the metallic pigment additive further comprises pigment and wherein the pigment is used in an amount ranging between 16% to 22% by weight of the metallic pigment additive.

11. The latex formulation as claimed in claim 9, wherein the surfactant is selected from the group consisting of anionic surfactant and non-ionic surfactant.

12. The latex formulation as claimed in claim 11, wherein the anionic surfactant is selected from the group consisting of sulphonic acid, stearic acid and mixtures therefrom.

13. The latex formulation as claimed in claim 11, wherein the non-ionic surfactant is selected from the group consisting of alcohol ethoxylates, alkylphenol ethoxylates, fatty alcohol polyglycol ethers, glyceryl esters, sorbitan esters and mixtures therefrom.

14. The latex formulation as claimed in claim 9, wherein the preservative is selected from the group consisting of 1,2-benzisothiazol-3(2H)-one, 2-methyl-3(2H)-isothiazolone and mixtures therefrom.

15. The latex formulation as claimed in claim 9, wherein the stabilizer is selected from the group consisting of propylene glycol, ethylene glycol and mixtures therefrom.

16. The latex formulation as claimed in claim 9, wherein the solvent is selected from the group consisting of tap water, distilled water, deionized water and mixtures thereof.

17. A glove is prepared from the latex formulation as claimed in claims 9 to 16.

18. The glove as claimed in claim 17, wherein the minimum thickness of glove fragment that can be detected is 0.01 mm.

19. The glove as claimed in claim 17, wherein the glove has magnetization ranging between 0.10 emu/g to 1.0 emu/g.

20. The glove as claimed in claim 17, wherein the glove has magnetization of 0.57 emu/g.
